# EUROPEAN PATENT APPLICATION

(11) **EP 4 598 039 A1**
(43) Date of publication of application: **06.08.2025**
(21) Application number: 25154343.5
(22) Date of filing: 28.01.2025
(51) Int. Cl.: H04N 23/661, H04N 5/272, H04N 23/90

(54) **IMAGE CAPTURING APPARATUS, CONTROL METHOD THEREOF, PROGRAM AND STORAGE MEDIUM**

(30) Priority: 05.02.2024 JP 2024015777
(71) Applicant: CANON KABUSHIKI KAISHA, Tokyo 146-8501 (JP)
(72) Inventor: FUNADA, Masahiro, Ohta-ku, Tokyo, 146-8501 (JP)
(74) Representative: TBK

(57) **Abstract**

An image capturing apparatus includes an imaging means configured to capture an image of a subject, a video output means configured to output a video signal output from the imaging means, and a metadata output means configured to output metadata including information related to the video signal, the metadata output means being different from the video output means. The video output means adds information that can identify an individual of the image capturing apparatus to the video signal and outputs the video signal.

## Description

### BACKGROUND OF THE INVENTION

### Field of the Invention

The present invention relates to an image capturing apparatus that outputs a video and metadata used for real-time synthesizing process through different paths.

### Description of the Related Art

In recent years, a technique called visual effects (VFX) has attracted attention in the field of video production. The VFX is for realizing a screen effect (visual effect) which is difficult to realize only by live-action, and is realized by synthesizing computer graphics (CG) and a live-action video.

Normally, a live-action video and a CG are synthesized in a post-production stage after shooting, but in recent years, there is an increasing need to create a CG first, synthesize the CG in real-time on a computer, and create a video while checking an output video on site. When synthesizing images in real-time on a computer, it is necessary to perform a process using shooting parameters (hereinafter referred to as metadata) superimposed for each frame of a live-action video.

Japanese Patent Laid-Open No. 2023-99380 discloses a method of individually outputting video and metadata from different transmission paths.

However, in the known system, only the output terminal for the video is connected between the image capturing apparatus and the computer, and thus even if the technique disclosed in Japanese Patent Publication Laid-Open No. 2023-99380 is used, there is a possibility that the user cannot recognize that the connection of the output terminal for the metadata is insufficient. In addition, there is a problem in that when a plurality of image capturing apparatuses exist at a shooting site and are to be connected to one or a plurality of computers, even if they are connected in a different combination, they cannot be recognized.

### SUMMARY OF THE INVENTION

The present invention has been made in view of the above-described problems, and an object of the present invention is to enable an apparatus on a reception side to correctly receive metadata matching a video in a case where an image capturing apparatus outputs the video and the metadata.

According to a first aspect of the present invention, there is provided an image capturing apparatus as specified in claims 1 to 11.

According to a second aspect of the present invention, there is provided a method of controlling an image capturing apparatus as specified in claim 12.

According to a third aspect of the present invention, there is provided a program as specified in claim 13.

According to a fourth aspect of the present invention, there is provided a computer-readable storage medium as specified in claim 14.

Further features of the present invention will become apparent from the following description of exemplary embodiments with reference to the attached drawings.

### BRIEF DESCRIPTION OF THE DRAWINGS

FIGS. 1A through 1D are diagrams illustrating a configuration of a real-time synthesis system and a concept of a synthesized video according to a first embodiment.
FIG. 2 is a diagram illustrating a configuration of an image capturing apparatus according to the first embodiment.
FIG. 3 is a diagram illustrating a user bit setting screen according to the first embodiment.
FIG. 4 is a diagram illustrating a data structure of a time code and a user bit related portion in SMPTE ST12.
FIG. 5 is a diagram illustrating an example in which 192.168.100.1 is set as an IP address in a user bit.
FIG. 6 is a diagram illustrating an example of metadata used at the time of real-time synthesis according to the first embodiment.
FIG. 7A is a diagram illustrating an example of connection between the image capturing apparatus and the real-time synthesis computer according to the first embodiment.
FIG. 7B is a diagram illustrating an example of connection between the image capturing apparatus and the real-time synthesis computer according to the first embodiment.
FIG. 8 is a flowchart illustrating an operation of determining whether or not a video signal and metadata matching thereto are received according to the first embodiment.
FIG. 9 is a diagram illustrating a modified example of the connection between the image capturing apparatus and the real-time synthesis computer according to the first embodiment.
FIG. 10 is a diagram illustrating a configuration of an image capturing apparatus according to a second embodiment.
FIG. 11 is a diagram illustrating an example of metadata used at the time of real-time synthesis according to the second embodiment.
FIG. 12 is a diagram illustrating a configuration of an image capturing apparatus according to a third embodiment.
FIG. 13 is a flowchart illustrating an operation of a metadata output control unit according to the third embodiment.

### DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### First Embodiment

A first embodiment of the present invention will be described below. In the first embodiment, a description will be given on a system using two image capturing apparatuses 101 and two real-time synthesis computers 102 that receive video signals and metadata output from each of the image capturing apparatuses. Then, a method for grasping whether or not a video signal and metadata matching thereto can be received in the system will be described. Note that as described in the background art, the real-time synthesis means process of creating a computer graphics (CG) first and synthesizing a live-action video with the CG in real time on a computer.

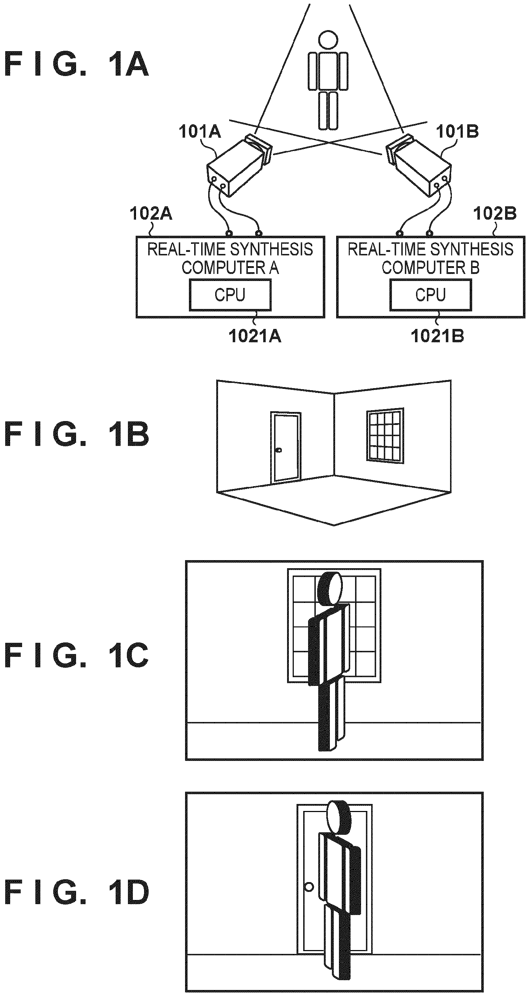

FIGS. 1A through 1D are diagrams illustrating a configuration of a real-time synthesis system and a concept of a synthesized video according to a first embodiment.

As illustrated in FIG. 1A, the real-time synthesis system is configured by two image capturing apparatuses 101A and 101B and two real-time synthesis computers 102A and 102B. The real-time synthesis computer 102A includes a CPU 1021A, and the real-time synthesis computer 102B includes a CPU 1021B.

The two image capturing apparatuses 101A and 101B capture images of a subject from different angles, and transmit captured video signals and metadata to the real-time synthesis computers 102A and 102B.

FIG. 1B is an example of a CG image of a background to be synthesized in real-time. The real-time synthesis computers 102A and 102B perform a process of processing the CG image of the background in real time and synthesizing the live-action video of the subject by using the information of the metadata received from the image capturing apparatuses 101A and 101B, respectively.

FIG. 1C is a conceptual diagram in which the subject captured by the image capturing apparatus 101A and the background of the CG image are synthesized, and since the person of the subject is shot from the diagonally left toward the subject, the CG image of the background is also synthesized with the image of the window shot from the diagonally left as the background.

On the other hand, FIG. 1D is a conceptual diagram in which the subject captured by the image capturing apparatus 101B and the background of the CG image are synthesized, and since the person of the subject is shot from the diagonally right toward the subject, the CG image of the background is also synthesized with the image of the door shot from the diagonally right as the background.

Note that, in the present embodiment, the information for processing the CG image of the background such as the orientation of the image capturing apparatuses 101A and 101B can be calculated only with the information of the metadata received from the image capturing apparatuses 101A and 101B, but the information may be calculated in combination with other apparatuses.

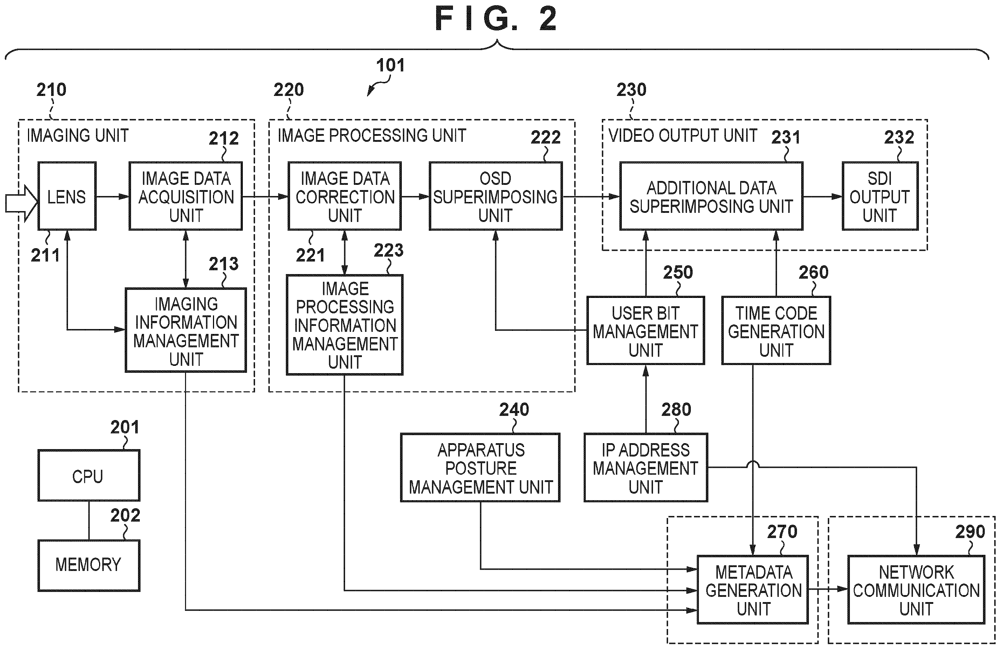

FIG. 2 is a diagram illustrating a configuration of an image capturing apparatus 101 according to the first embodiment. Since the image capturing apparatuses 101A and 101B both have the same configuration, they are representatively expressed as an image capturing apparatus 101.

The image capturing apparatus 101 includes an imaging unit 210, an imaging processing unit 220, a video output unit 230, an apparatus posture management unit 240, a user bit management unit 250, a time code generation unit 260, a metadata generation unit 270, an IP address management unit 280, and a network communication unit 290. Furthermore, in order to control the entire image capturing apparatus 101, a central processing unit (CPU) 201 that executes a control program stored in a memory 202 is included.

The imaging unit 210 includes a lens 211, an image data acquisition unit 212, and an imaging information management unit 213. The lens 211 is a mechanism including an optical component that takes in light and forms an image on the image data acquisition unit 212, and can move the lens for zoom and focus adjustment. The image data acquisition unit 212 includes an imaging element that converts the light taken in into an electric signal. The imaging information management unit 213 manages lens information such as a subject distance and a focal length acquired from a sensor (not illustrated), exposure information such as a T value and a shutter value, and imaging information such as an effective resolution and a frame rate of the imaging element in association with the acquired image data.

The image processing unit 220 includes an image data correction unit 221, an on screen display (OSD) superimposing unit 222, and an image processing information management unit 223.

The image data correction unit 221 includes a plurality of image processing blocks, and performs gamma correction, color gamut correction, and resolution conversion. The OSD superimposing unit 222 displays a setting menu in cooperation with an operation unit (not illustrated) and receives a setting change from a user. Although not illustrated, the setting change is transmitted to and applied to each unit. Similarly to the imaging information management unit 213, the image processing information management unit 223 manages image processing information such as gamma correction and color correction information applied by the image data correction unit 221 in association with the image data taken in.

The video output unit 230 includes an additional data superimposing unit 231 and a serial digital interface (SDI) output unit 232.

The additional data superimposing unit 231 superimposes data associated with video data to be output, which is called ancillary data in SDI. An example includes a time code standardized by the SMPTE ST12 to be described later. The SDI output unit 232 shapes the video data on which the additional data is superimposed into an SDI signal, and outputs the SDI signal to an external computer or the like that performs real-time synthesis.

The apparatus posture management unit 240 manages posture information such as pitch, yaw, and roll of the image capturing apparatus 101 in association with the take-in timing of the image data using an acceleration sensor or the like (not illustrated).

The user bit management unit 250 manages information that can be stored together with a time code standardized in SMPTE ST12 described later. The user bit can store arbitrary data, and in the known image capturing apparatus, date and time and time information are stored, but in the present embodiment, an IP address can also be stored. This will be described in detail below.

The time code generation unit 260 generates a time code that is a code designating an hour, a minute, a second, and a frame. Although the expression of the time code in FIG. 2 is omitted, the time code is allocated for each frame with respect to the image data acquired by the image data acquisition unit 212, is used for management of which frame information acquisition and correction in each unit are performed, and is also used for synchronizing the video and the metadata externally.

The metadata generation unit 270 acquires each piece of information from the outputs of the imaging information management unit 213, the image processing information management unit 223, the apparatus posture management unit 240, and the time code generation unit 260 for each frame, and shapes the information into a format defined in advance as metadata. The metadata to be output will be described later.

The IP address management unit 280 manages an IP address of a network to be described later. Although the expression of the IP address in FIG. 2 is omitted, the IP address management unit 280 may cooperate with the OSD superimposing unit 222 and provide a setting menu for the user to set the IP address. Alternatively, a dynamic host configuration protocol (DHCP) server may be used for the allocation.

The network communication unit 290 is connected to a network via a wired or wireless LAN. The network communication unit 290 transmits the metadata generated by the metadata generation unit 270 to the external device by, for example, a user datagram protocol (UDP) using the IP address managed by the IP address management unit 280. The UDP has features of low communication cost and low delay, and thus is exemplified here, but is not limited thereto.

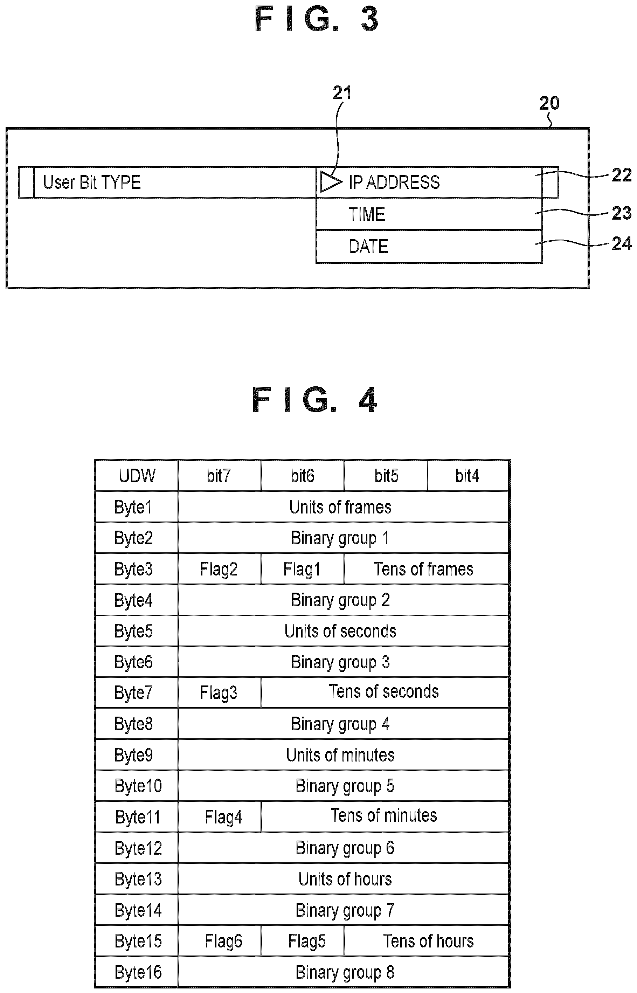

Note that, in the present embodiment, although omitted for easy understanding, the image capturing apparatus 101 may include a recording unit that records video data in a recording medium such as a built-in memory or an SD card, a live view panel unit that displays an output video of the image processing unit 220, or the like. When the live view panel unit is provided, it is preferable that menu setting is performed on the live view panel unit. Next, a case where an IP address is superimposed and output as a user bit will be described with reference to FIGS. 3 through 5.

FIG. 3 is a view illustrating the user bit setting screen 20, and includes a cursor 21 representing the currently selected item, and IP addresses 22, time 23, and date 24 which are options. The option is changed with an up/down key (not illustrated), and the selection is determined by a setting key. When the IP address 22 is selected, the IP address set as the user bit by the IP address management unit 280 is superimposed by the additional data superimposing unit 231 and is output by the SDI output unit 232. As described above, the additional data superimposing unit 231 superimposes the time code and the user bit in the format standardized by the SMPTE ST12.

FIG. 4 is a diagram illustrating a portion related to a time code and a user bit in the data structure defined in the SMPTE ST12. The user bits are stored in an area of a total 32 bits of Binary groups 1 to 8.

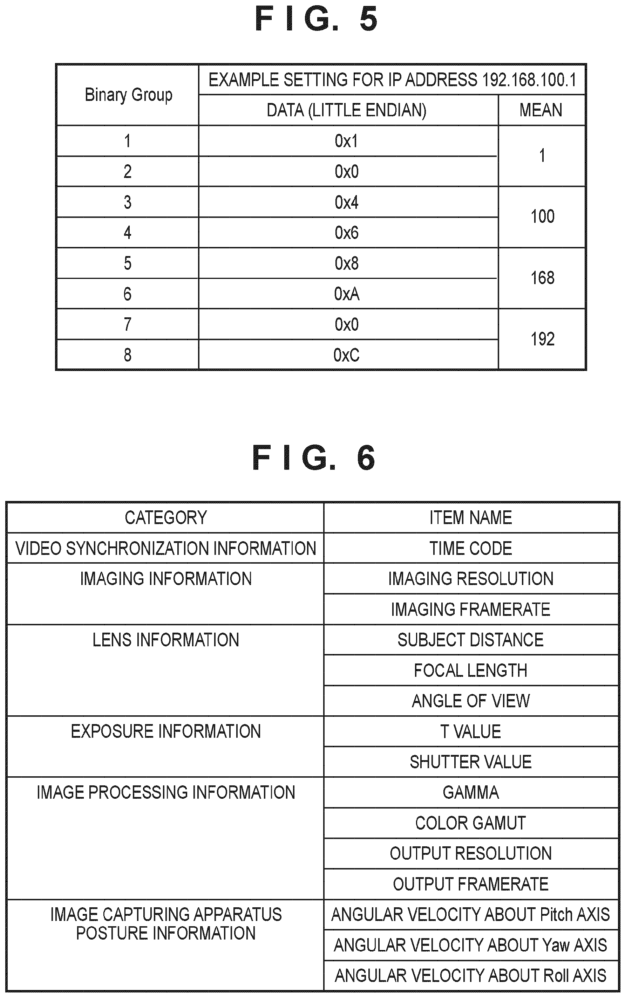

FIG. 5 is a diagram illustrating an example of a case where 192.168.100.1 is set as the IP address.

In a hexadecimal expression, 0 × C0, 0 × A8, 0 × 64, and 0 × 01 are stored in little endian in accordance with the time code. This storage method is an example, and the present invention is not limited thereto. As another example, it may be only a part that can allow an individual to be identified instead of the entire IP address. That is, in a case where the subnet mask is set, a bit set to 0 may be set, which enables individual identification on the subnet with a smaller number of bits.

FIG. 6 is a diagram illustrating metadata that will be used at the time of real-time synthesis. The metadata includes a time code serving as information for synchronizing with the video, imaging information when the video is acquired, lens information, exposure information, image processing information, posture information of the image capturing apparatus, and the like. These pieces of information can be respectively acquired from the imaging information management unit 213, the image processing information management unit 223, the apparatus posture management unit 240, and the time code generation unit 260 illustrated in FIG. 2. These items are merely examples, and in real-time synthesis as exemplified in FIGS. 1C and 1D, more detailed information are required, but description of definitions conforming to the actual situation is not the gist of the present invention and thus is omitted.

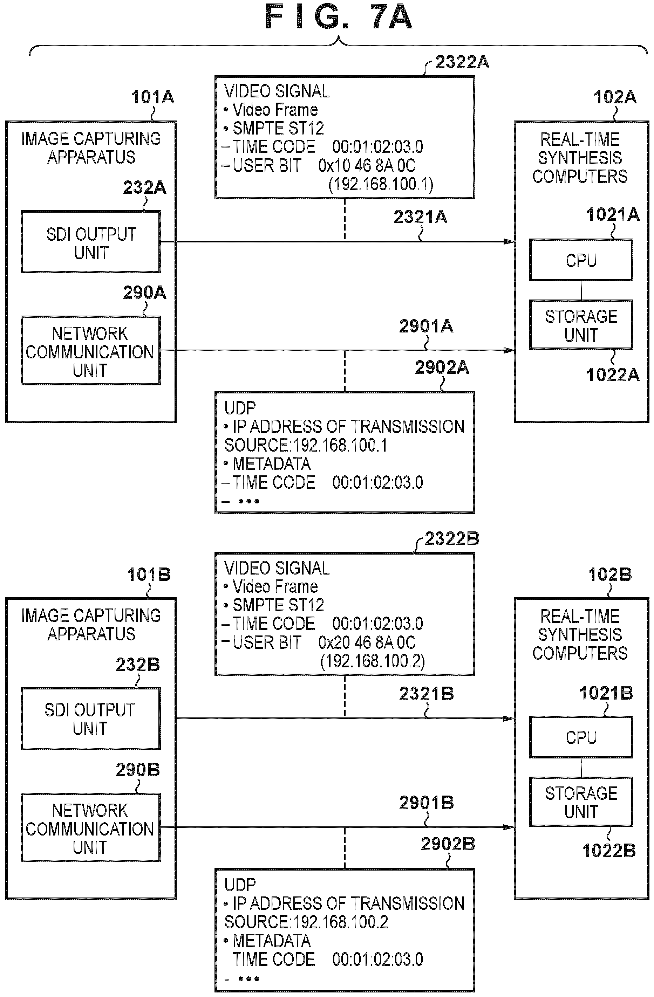

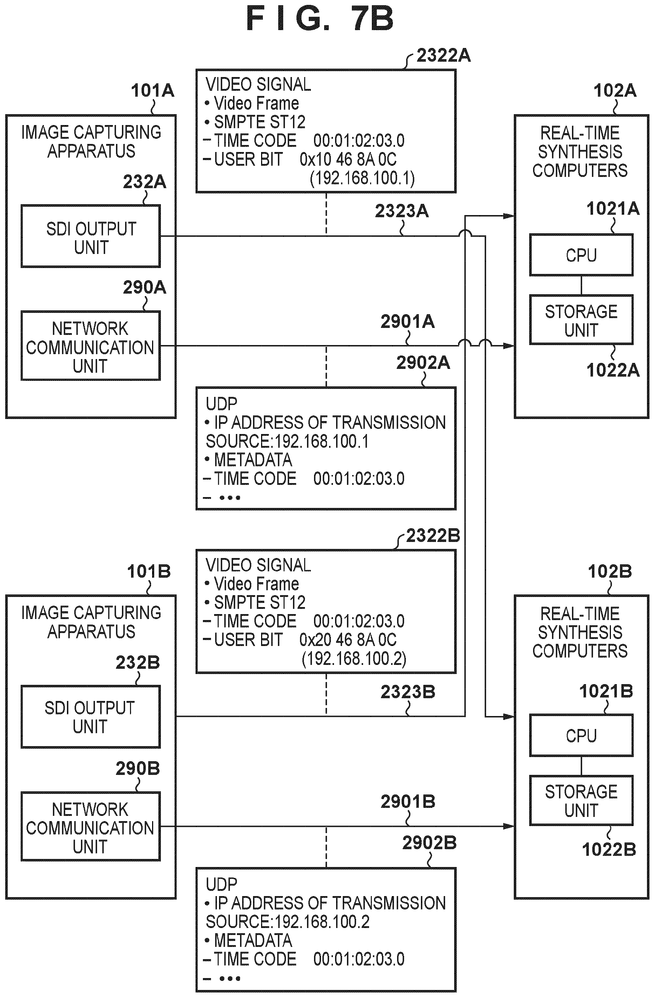

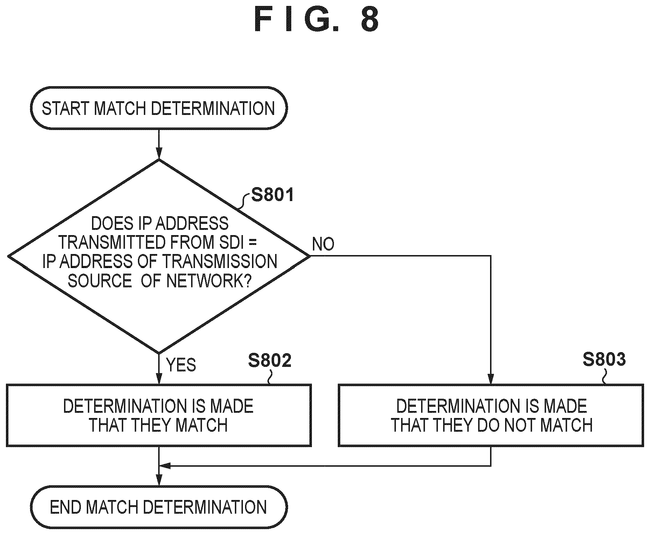

With reference to FIGS. 7A, 7B, and 8, a method for determining whether or not a video signal and metadata matching thereto are received in the first embodiment will be described.

FIG. 7A is a diagram illustrating an example in which an output of a video signal and an output of metadata matching thereto are correctly connected.

The SDI output unit 232A and the network communication unit 290A of the image capturing apparatus 101A are connected to the real-time synthesis computer 102A via an SDI cable 2321A and a network cable 2901A, respectively. On the other hand, the SDI output unit 232B and the network communication unit 290B of the image capturing apparatus 101B are connected to the real-time synthesis computer 102B via an SDI cable 2321B and a network cable 2901B, respectively. Furthermore, the IP address of the image capturing apparatus 101A is set to 192.168.100.1, and the IP address of the image capturing apparatus 101B is set to 192.168.100.2.

In a video signal for one frame transmitted on the SDI cable 2321A, indicated by reference numeral 2322A, a time code assigned to the frame is described, and an IP address is stored in a user bit. Then, in a signal for one frame transmitted on the network cable 2901A, indicated by reference numeral 2902A, an IP address of a transmission source, which is essential on the protocol of UDP, is described, and metadata such as a time code is stored as arbitrary transmission data. The IP addresses stored here are both 192.168.100.1 set in the image capturing apparatus 101A.

On the other hand, reference numerals 2322B and 2902B similarly indicate transmission data of the image capturing apparatus 101B. Since 192.168.100.2 is set as the IP address of the image capturing apparatus 101B, that value is stored.

FIG. 7B is a diagram illustrating an example in which a video signal and metadata not matching thereto are connected.

The output of the SDI output unit 232A of the image capturing apparatus 101A is connected to the real-time synthesis computer 102B, and the output of the SDI output unit 232B of the image capturing apparatus 101B is connected to the real-time synthesis computer 102A.

FIG. 8 is a flowchart for determining whether or not a video signal and metadata matching thereto can be received, which should be performed for example, by the real-time synthesis computers 102A and 102B. The operation of the flowchart of FIG. 8 is realized by the CPU 1021A of the real-time synthesis computer 102A executing the control program stored in the storage unit 1022A. Alternatively, the operation is realized by the CPU 1021B of the real-time synthesis computer 102B executing the control program stored in the storage unit 1022B.

Since the operation of FIG. 8 is executed in the same manner in the real-time synthesis computers 102A and 102B, only the operation in the real-time synthesis computer 102A will be described below.

In step S801, the CPU 1021A of the real-time synthesis computer 102A determines whether the IP address extracted from the Binary groups of the input SDI matches the IP address of the transmission source of the network.

If they match, the CPU 1021A proceeds the process to step S802 and determines that they match. On the other hand, when they do not match, the CPU 102A proceeds the process to step S803 and determines that they do not match.

Therefore, in the example of FIG. 7A, since the IP addresses are both 192.168.100.1, determination is made that they match in the real-time synthesis computer 102A. Furthermore, in the real-time synthesis computer 102B, since the IP addresses are both 192.168.100.2, determination is made that they match.

On the other hand, in the example of FIG. 7B, in the real-time synthesis computer 102A, since the IP address is 192.168.100.2 for the SDI and the IP address is 192.168.100.1 for the network, determination is made that they do not match. In the real-time synthesis computer 102B, since, conversely, the IP address is 192.168.100.1 for the SDI and the IP address is 192.168.100.2 for the network, determination is made that they do not match.

As described above, the image capturing apparatus 101 according to the present embodiment stores the IP address information in the video signal output, and transmits metadata matching thereto through the network with the same IP address. Therefore, it is possible to grasp whether or not reception can be performed in a correct combination in the device that receives them.

Note that, in the present embodiment, the storage destination of the IP address in the video signal is set to the Binary group of SMPTE ST12 which is one of ancillary data most utilized in the SDI, but there is no problem even if the storage destination is another ancillary data area. In addition, the IP address is V4 with a 32 bit length, but even if the IP address is V6 with a 128 bit length or a 64 bit MAC address, the IP address can be applied by storing only a part thereof or by storing with the IP address divided into a plurality of frames. Furthermore, a video output terminal other than the SDI can be applied as long as the additional information can be stored. For example, in High Definition Multimedia Interface (HDMI) (registered trademark), since arbitrary information can be stored in a Vendor Specific InfoFrame (VSIF) packet, this may be used.

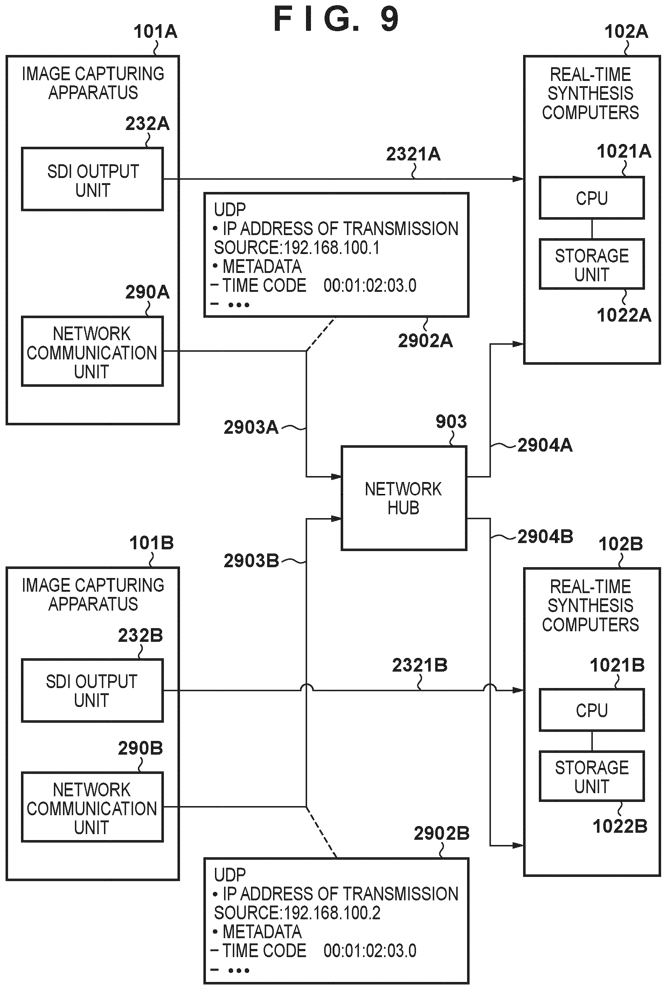

Furthermore, in the above description, the network connection between the image capturing apparatus 101 and the real-time synthesis computer 102 has been exemplified as a one-to-one connection. However, this is to facilitate the understanding of the description, and as in the modified example of FIG. 9, the connection may be collected once by the network hub 903 or may be wireless.

In the modified example of FIG. 9, the network hub 903 is connected to the image capturing apparatuses 101A and 101B and the real-time synthesis computers 102A and 102B via network cables 2903A, 2903B, 2904A, and 2904B, respectively. In such a case, since the real-time synthesis computers 102A and 102B can receive the metadata of two IP addresses, it is necessary to designate which one to receive, but the one transmitted from the video signal may be used as it is. That is, it is also possible to automatically set the transmission IP address of the metadata matching the video signal with the IP address superimposed on the video signal without causing the user to perform the setting, which greatly enhances the convenience.

### Second Embodiment

Hereinafter, the second embodiment of the present invention will be described.

The determination method described in the first embodiment uses, as information for identifying an individual, an IP address that needs to be added when the metadata is output via a network. However, in the case of one-to-one connection, there is a problem that the same address is designated and cannot be identified in some cases. In the second embodiment, in order to handle such a case, a determination method using a serial number which is an identification number assigned individually to each product when producing the product will be described.

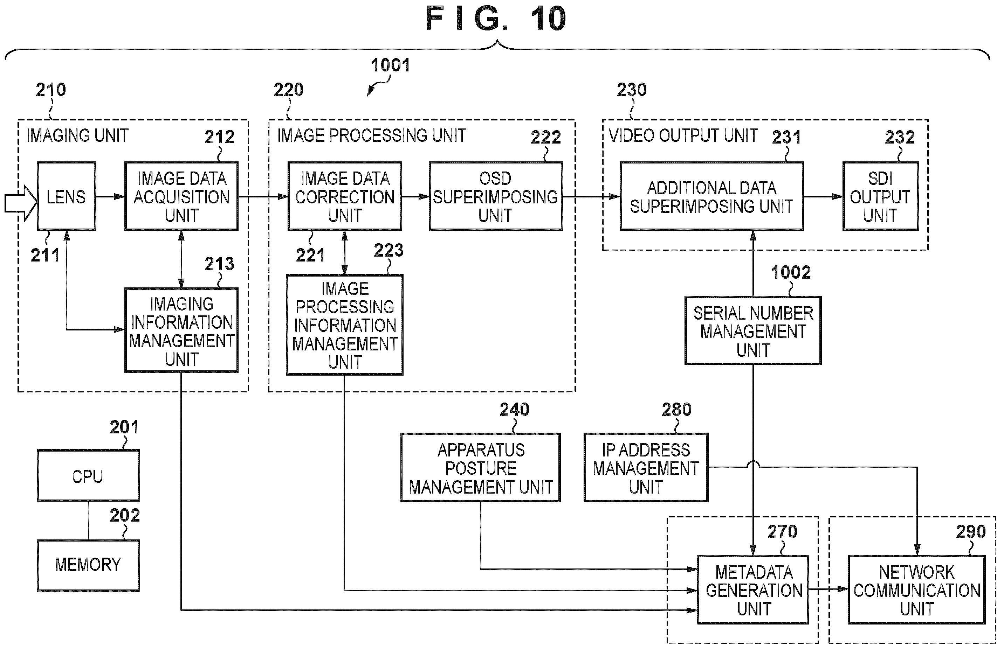

FIG. 10 is a diagram illustrating a configuration of an image capturing apparatus 1001 according to the second embodiment. The configuration of the image capturing apparatus 1001 in the second embodiment is different from the configuration of the first embodiment in FIG. 2 in that a serial number management unit 1002 is added. The serial number management unit 1002 saves a serial number, which is an identification number of each individual, in a nonvolatile memory (not illustrated) at the time of production, and manages the serial number so as to be readable at any time. Other configurations are substantially the same as those of the image capturing apparatus 101 of the first embodiment, but there is a slight difference, and thus will be described.

In the present embodiment, it is not necessary to send an IP address to the user bit management unit 250, and thus input from the IP address management unit 280 is eliminated. Furthermore, the option of the IP address 22 is deleted from the user bit setting screen 20 in FIG. 3.

The additional data superimposing unit 231 also has a function of superimposing a serial number with an ancillary packet that can store an existing arbitrary text or an ancillary packet uniquely defined by a manufacturer.

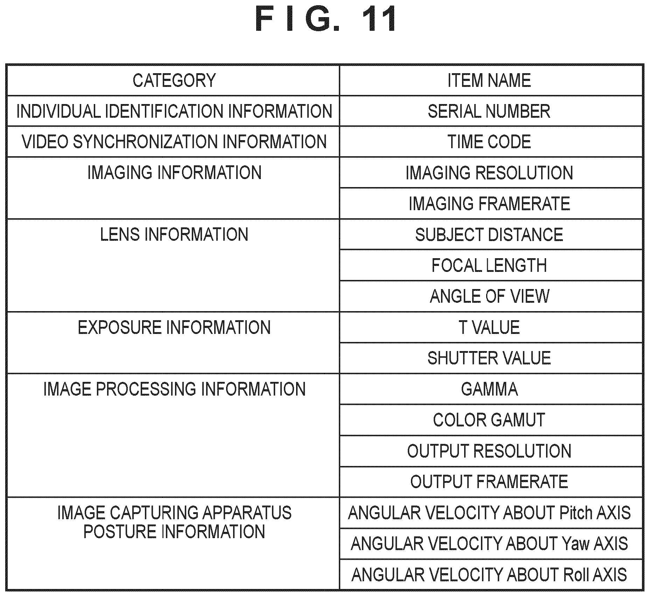

As illustrated in FIG. 11, the metadata generation unit 270 further adds a serial number as individual identification information to the information illustrated in FIG. 6 as an example of metadata used at the time of real-time synthesis.

According to the above configuration, the serial number superimposed on the video signal output from the SDI output unit 232 is compared with the serial number of the metadata output from the network communication unit, so that it is possible to determine whether or not they are output from the same individual.

In the case of such a configuration, as compared with the first embodiment, a value that cannot change for each frame, such as a serial number, is communicated for each frame in metadata communication, and the amount of communication of the network is increased although the amount is small. Therefore, it is preferable to perform control such that the transmission frequency is lower than the frame period of the video. For example, a method may be adopted in which the metadata to be transmitted is controlled such that the metadata illustrated in FIG. 11 is transmitted only in one frame in one second, and the metadata illustrated in FIG. 6 is transmitted in the other frames.

As described above, since the image capturing apparatus 1001 according to the present embodiment includes different serial numbers for each individual in the video signal output and the metadata output, it is possible to grasp whether or not the video signal output and the metadata output can be received in a correct combination by a device that receives the same.

Note that, in the present embodiment, the serial number is used as the information for identifying the individual, but the information is not limited to the serial number as long as the information is similarly assigned to each individual, and may be generated during operation like a random number or a hash value. In addition, information that can always identify an individual, such as a serial number, is preferable, but depending on the usage, even an identification name set by a user can identify an individual, and thus such information may be used.

### Third Embodiment

Hereinafter, the third embodiment of the present invention will be described.

The image capturing apparatuses according to the first embodiment and the second embodiment are based on the premise that metadata is constantly output from the metadata output unit. However, in practice, there may be a case where it is desired to stop the output of the metadata. In this case, when the output is simply stopped, there is a problem that it is not possible to determine whether the output is simply stopped or a disconnection occurred when a trouble such as a disconnection occurs. Therefore, in the image capturing apparatus according to the third embodiment, in a case where the video signal and the metadata matching thereto are output, determination can be made on whether or not the combination is correct, and in a case where the metadata is not output, determination thereof can be made.

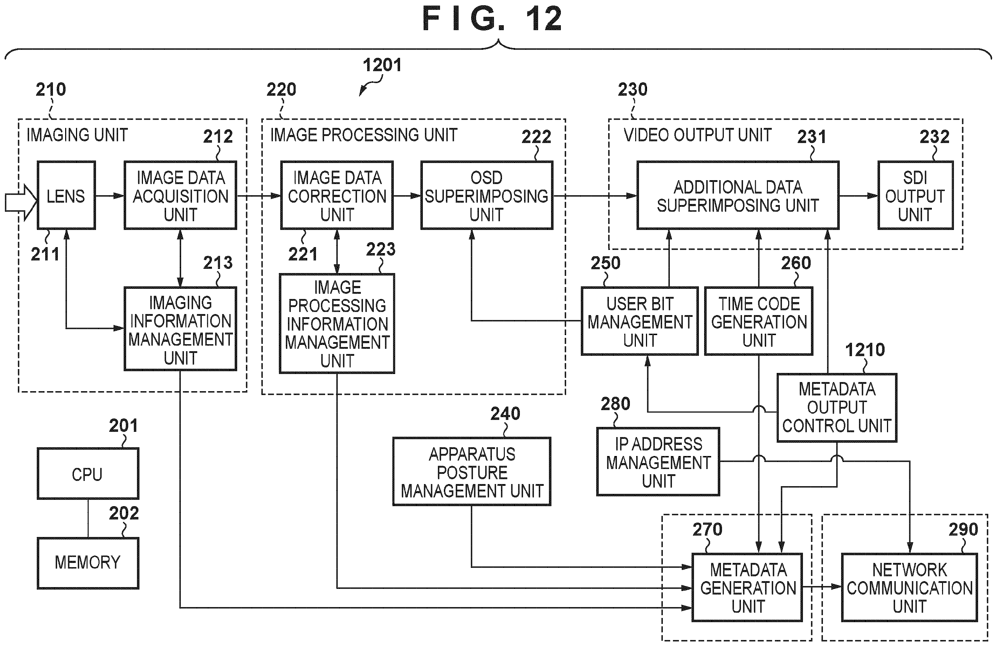

FIG. 12 is a diagram illustrating a configuration of an image capturing apparatus 1201 according to the third embodiment. The configuration of the image capturing apparatus 1201 in the third embodiment is different from the image capturing apparatus 101 in the first embodiment in that a metadata output control unit 1210 is added. The metadata output control unit 1210 performs a control as to whether or not to output metadata based on an instruction from the CPU 201. The setting is executed by, for example, a user's operation. When the metadata is output, the operation is the same as that of the first embodiment, and when the metadata is not output, the output of the metadata from the network communication unit 290 is stopped, and the superimposition of the IP address from the SDI output unit 232 is also stopped.

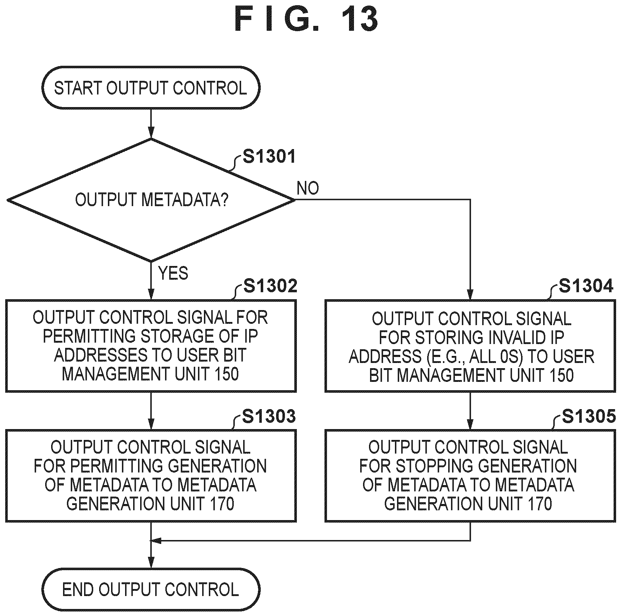

Control contents of the metadata output control unit 1210 will be described with reference to a flowchart of FIG. 13. This flow is executed when whether or not to output metadata is changed by a user's operation. Furthermore, the operation of the flowchart of FIG. 12 is realized by the CPU 201 of the image capturing apparatus 1201 controlling the metadata output control unit 1210 by executing the control program stored in the memory 202.

In step S1301, the CPU 201 determines whether or not the user's operation is setting for outputting metadata. The CPU 201 proceeds the process to step S1302 when the setting is for outputting metadata, and proceeds the process to step S1304 when the setting is not for outputting metadata.

In step S1302, the CPU 201 outputs a control signal for permitting storage of IP addresses to the user bit management unit 250. The superimposed output of the IP address is thereby started from the SDI output unit 232.

In step S1303, the CPU 201 outputs a control signal for permitting generation of the metadata to the metadata generation unit 270. The output of metadata is thereby started from the network communication unit 290.

The process in step S1302 and the process in step S1303 do not necessarily need to be executed simultaneously, but it is preferable that the process in each step is executed for the same time code. That is, if the superimposition of the IP address from the SDI output unit 232 is started for a certain time code, it is preferable that the metadata output from the network communication unit 290 is also started from the frame of the relevant time code.

On the other hand, in step S1304, the CPU 201 outputs a control signal for storing an invalid IP address (e.g., all 0) to the user bit management unit 250. As a result, the superimposition of the IP address from the SDI output unit 232 is stopped.

In step S1305, the CPU 201 outputs a control signal for stopping generation of the metadata to the metadata generation unit 270. As a result, the output of the metadata from the network communication unit 290 is stopped.

The stop processes in steps S1304 and S1305 also do not necessarily need to be executed simultaneously, similarly to the output processes in steps S1302 and S1303, but it is preferable that the process in each step is executed for the same time code.

As described above, since the image capturing apparatus 1201 according to the present embodiment controls whether or not to superimpose the individual identification information from the video signal according to whether or not to output the metadata, whether or not the combination is correct can be determined in a case where the metadata is output. Furthermore, in a case where the metadata is not output, determination thereof can be made.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An image capturing apparatus comprising:
an imaging means configured to capture an image of a subject;
a video output means configured to output a video signal output from the imaging means; and
a metadata output means configured to output metadata including information related to the video signal, the metadata output means being different from the video output means,
wherein the video output means adds information that can identify an individual of the image capturing apparatus to the video signal and outputs the video signal.

2. The image capturing apparatus according to claim 1, wherein the video output means adds information that can identify an individual of the image capturing apparatus to the video signal when the metadata is output from the metadata output means.

3. The image capturing apparatus according to claim 1, wherein the metadata output means is connected to a network via a wired or wireless LAN.

4. The image capturing apparatus according to claim 3, wherein the information that can identify an individual of the image capturing apparatus is an IP address or a MAC address of the network.

5. The image capturing apparatus according to claim 1, wherein the information that can identify an individual of the image capturing apparatus is a serial number assigned for each individual of the image capturing apparatus.

6. The image capturing apparatus according to claim 5, wherein the metadata output means includes the serial number in the metadata.

7. The image capturing apparatus according to claim 1, wherein the information that can identify an individual of the image capturing apparatus is an identification name set for each individual of the image capturing apparatus by a user.

8. The image capturing apparatus according to claim 7, wherein the metadata output means includes the identification name in the metadata.

9. The image capturing apparatus according to claim 6, wherein the metadata output means includes the information that can identify an individual of the image capturing apparatus in the metadata at a frequency less than a frame period of the video signal.

10. The image capturing apparatus according to claim 1, wherein the video output means adds a time code and a user bit based on a standard of SMPTE ST12 to the video signal.

11. The image capturing apparatus according to claim 1, wherein the video output means adds information for identifying an individual of the image capturing apparatus to the video signal in a case where metadata is output from the metadata output means, and does not add information for identifying an individual of the image capturing apparatus to the video signal in a case where metadata is not output from the metadata output means.

12. A method of controlling an image capturing apparatus including an imaging means configured to capture an image of a subject, the method comprising:
outputting a video signal output from the imaging means; and
outputting metadata including information regarding the video signal, the outputting of metadata being different from outputting the video signal,
wherein outputting the video signal includes adding information that can identify an individual of the image capturing apparatus to the video signal, and outputting the video signal.

13. A program for causing a computer to function as each means of the image capturing apparatus according to any one of claims 1 to 11.

14. A computer-readable storage medium storing a program for causing a computer to function as each means of the image capturing apparatus according to any one of claims 1 to 11.
